# EUROPEAN PATENT APPLICATION

(11) **EP 0 775 980 A2**
(43) Date of publication of application: **28.05.1997**
(21) Application number: 96118696.2
(22) Date of filing: 21.11.1996
(51) Int. Cl.: G06T 11/60

(54) **Image processing apparatus**

(30) Priority: 24.11.1995 JP 306115/95; 27.03.1996 JP 72647/96
(71) Applicant: DAINIPPON SCREEN MFG. CO., LTD., Kamikyo-ku Kyoto-shi Kyoto-fu (JP)
(72) Inventor: Yamamoto, Hiroshi, c/o Dainippon Screen Mfg Co,Ltd, Kumiyama-cho, Kuze-gun, Kyoto (JP); Matsumura, Takuro, c/o Dainippon Screen Mfg Co,Ltd, Kumiyama-cho, Kuze-gun, Kyoto (JP); Murayama, Hiroshi, c/o D.S. Tech Research Co, Ltd, Minami-ku, Tokyo 601 (JP)
(74) Representative: WILHELMS, KILIAN & PARTNER Patentanwälte

(57) **Abstract**

An image processing apparatus which includes an image process program for processing image components, a layout program for arranging the image components, a display means for displaying the image components, a selection determining means for determining when one image component is selected from a plurality of image components displayed on the display means, initializing means for initializing an image program capable of processing the selected image component, and a display control means for displaying an image of the selected image component on the display means with at a predetermined magnified size.

## Description

### BACKGROUND OF THE INVENTION

### 1. Field of the Invention

The present invention relates to an image processing apparatus. More particularly, the present invention relates to an image processing apparatus which includes an image processing program for processing image parts displayed on a display device.

### 2. Description of the Related Art

It is now well known in the printing art to prepare documents for printing by using a computer and a page layout application to manipulate and arrange digital image data. These types of documents typically include different types of image data, such as line work expressed in a run-length format, and picture data expressed in a bitmap format. Each of these image components must be processed together and then laid out on the page.

Typically, the image processing apparatus contains a page layout program for manipulating the various image components, a line work processing program for processing line work, and a vector graphic processing program for processing vector graphics.

When the layout application is opened in this image processing apparatus, the various image components are simultaneously displayed on the display region (or "page window") of the CRT. When the user desires to edit an image component such as line work, the user must switch to the line work processing program. When this occurs, an icon list representing all the line work images currently stored in the apparatus is displayed on a portion of the CRT. The user selects the desired icon from this list and drags and drops this icon onto the page window. Next, the selected line work is displayed in a zoom window in an enlarged size, if required, and this image may then be edited.

The steps described above that the user is required to take in order to edit these image components is time-consuming and can greatly reduce productivity. Normally, when the layout program is switched to the line work processing program, the line work to be edited is displayed on the screen at 1x magnification, thus making it difficult to accurately edit the image. Thus, the user must enlarge the line work manually by means of a zoom window. Moreover, when line work and other types of images are displayed in an overlapping manner, the line work will normally be displayed on the lowermost level. Consequently, the other types of images must be temporarily deleted before the line work can be edited.

As previously explained, the conventional image processing apparatus requires the user to go through a number of difficult and time-consuming steps in order to edit an image.

### SUMMARY OF THE INVENTION

It is therefore an object of the present invention to provide an image processing apparatus which includes an image processing program for processing image components and a layout program for organizing these image components on a page, in which image component processing can be better facilitated.

In accordance with one aspect of the present invention, an image processing apparatus includes at least one image processing program for processing image components having one data type, a layout program for arranging image components having various data types, and the image processing program and the layout program are both switchably operable. The image processing apparatus further includes a display means for displaying the image components arranged by the layout program, a selection determining means for determining whether one of the image components displayed on the display means has been selected by a user, an initializing means for initializing an image processing program capable of processing an image component selected by a user, and a display control means for displaying the selected image component on the display means with an magnified size.

Preferably, the image processing apparatus includes an image type determining means for determining a data type of the selected image component, and a menu display means for displaying a menu listing of image processing programs capable of processing the selected image component having a data type determined by the image type determining means. The initializing means initializes an image processing program selected by the user from the image processing programs displayed in the menu.

Preferably, the menu display means displays a previously initialized image processing program at a top of the menu listing.

Preferably, the initializing means automatically initializes the image processing program after the image component has been selected if the image processing program is capable of processing the selected image component.

Preferably, the initializing means automatically initializes a previously initialized image processing program capable of processing the selected image component if a plurality of image processing programs capable of processing the selected image component are present.

Preferably, the display control means displays only the selected image component with a magnified size and deletes the image components not selected.

Preferably, the image component is displayed on the display means as an icon in an icon list, and the selection determining means determines that one of the image components has been selected.by the user when the icon has been dragged and dropped by the user onto a layout display area.

Preferably, the display control means displays the magnified image component to be aligned along one edge of the display means and overlapping other image components displayed in the layout program.

Preferably, the display control means enlarges the selected image to a maximum allowable magnification in accordance with a display area of the display means and a shape of the selected image component, and displays the magnified image on the display area.

Preferably, the image component is line work expressed in a run length format, and the image processing program is a line work processing program.

Preferably, the image component is at least one selected from the group consisting of line work expressed in a run length format, a picture in a bitmap format, a graphic form in a vector format, or a character in a code format.

In another aspect of the invention, an image processing apparatus includes a microprocessor configured to operate in a processing mode and a layout mode, and to display images on a display connected to the microprocessor, the images being of various data types. The microprocessor is further configured to switch between the processing mode and the layout mode. The images are displayed on the display at a first magnification. A selection determining means operably associated with the microprocessor determines whether one of the images displayed on the display means has been selected by a user and in response to the selection of the one of the images, the one of the images is displayed on the display at a second magnification greater than the first magnification.

Preferably, the apparatus includes an image type determining means for determining a data type of the one of the images, a menu display means for displaying a menu listing of image processing programs capable of processing the selected image component having a data type determined by the image type determining means.

Preferably, the menu display means displays a previously initialized image processing program at a top of the menu listing.

Preferably, the apparatus also includes a means for initializing an image processing program for editing the one of the images.

In accordance with another aspect of the invention, method for processing images with an image processing apparatus includes the steps of:
providing an image processing apparatus with a plurality of image processing programs, each image processing program configured for processing image components, each image processing program configured to process one type of image component;
providing an image processing apparatus with a layout program for arranging image components having various data types;
switching between operations of the image processing programs and the layout program;
displaying the image components arranged by the layout program at a first magnification;
determining selection of one of the image component displayed on the display in response to selection of the one image component by a user;
determining which type of image component has been selected;
initializing one of the image processing programs in response to determination of which type of image component has been selected; and
displaying the selected image component at a second magnification greater than the first magnification.

Preferably, the method further includes the steps of:
displaying a menu listing of image processing programs capable of processing the selected image component in response to determination of the data type of the selected image component;
initializing one of the image processing programs displayed in the menu in response to selection by the user.

Preferably, the method further includes the steps of:
initializing a previously initialized image processing program capable of processing the selected image component where a plurality of image processing programs capable of processing the selected image component are present.

Preferably, the method further includes the steps of:
displaying only the selected image component at the second magnification.

Preferably, the method further includes the steps of:
displaying the selected image component as an icon in an icon list; and
determining one of the image components has been selected in response to the user dragging and dropping the icon onto a displayed layout display area.

Other objects, features, aspects and advantages of the present invention will be apparent from the following detailed description of the present invention when taken in conjunction with the accompanying drawings, in which like reference numerals designate the same or similar parts throughout.

### BRIEF DESCRIPTION OF THE DRAWINGS

Fig. 1 is a block diagram showing an arrangement of an image processing apparatus including a first embodiment of the present invention;
Fig. 2 is a more detailed block diagram of the image processing apparatus depicted in Fig. 1;
Fig. 3(a), 3(b), 3(c) and 3(d) show various examples of a display screen of the image processing apparatus depicted in Fig. 1;
Fig. 4 is a flow chart showing a program switching process for the image processing apparatus depicted in Fig. 1;
Fig. 5 is a flow chart showing a layout process for the image processing apparatus depicted in Fig. 1;
Fig. 6 is a flow chart showing a layout process for the image processing apparatus depicted in Fig. 1;
Fig. 7 is a flow chart showing additional steps in the line work process depicted in Fig. 6;
Fig. 8 is a flow chart showing additional steps in the line work process for the image processing apparatus depicted in Fig. 7;
Fig. 9 is a flow chart showing a special window process for the image processing apparatus depicted in Fig. 1;
Fig. 10 represents a data structure of an image pasted in a layout window of the image processing apparatus depicted in Fig. 1;
Fig. 11 shows a data structure of a line work file of the image processing apparatus depicted in Fig. 1;
Fig. 12 shows a data structure of a line work file when the file is stored in a control unit memory of the image processing apparatus depicted in Fig. 1;
Fig. 13 is a block diagram of an image processing apparatus according to a second embodiment of the present invention;
Fig. 14 is a flow chart showing the production an application management table in the image processing apparatus depicted in Fig. 13;
Fig. 15(a) shows a structure of an image process program for the image processing apparatus depicted in Fig. 13;
Fig. 15(b) a structure of an application management table for the image processing apparatus depicted in Fig. 13;
Fig. 16 is a flow chart showing a layout process in the image processing apparatus depicted in Fig. 13;
Fig. 17 is a flow chart showing a pop-up menu display process in the image processing apparatus depicted in Fig. 13;
Fig. 18 is a flow chart showing an image process in the image processing apparatus depicted in Fig. 13;
Fig. 19(a), 19(b), 19(c) and 19(d) show various examples of a display screen and a pop-up menu of the image processing apparatus depicted in Fig. 13; and
Fig. 20 is a flow chart showing a modified layout process in the image processing apparatus depicted in Fig. 13.

### DETAILED DESCRIPTION OF THE PREFERRED EMBODIMENTS

### FIRST EMBODIMENT

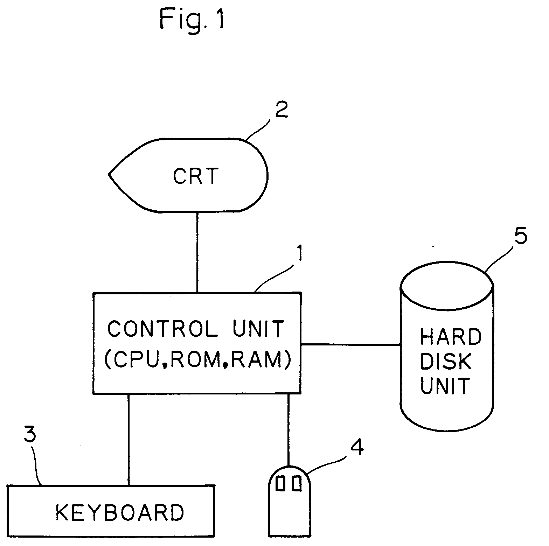

Fig. 1 shows a block diagram of an image processing apparatus according to a first embodiment of the present invention, and includes a CRT 2, a keyboard 3, a mouse 4, and a hard disk unit 5, all of which are connected to a control unit 1. The control unit 1 contains a microcomputer which includes a CPU, a RAM, a ROM and the like.

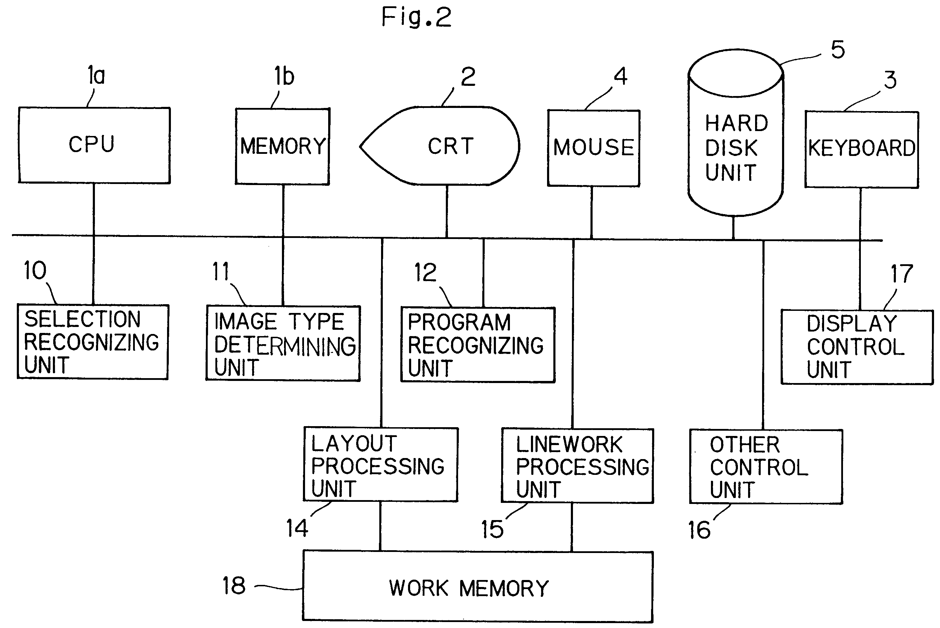

Fig. 2 shows an expanded block diagram of the image processing apparatus. Both a CPU 1a and a memory 1b are contained within the control unit 1 shown in Fig. 1. The control unit 1 also includes a selection determining unit 10 for determining whether an image component displayed on the CRT 2 has been selected by the user, an image type determining unit 11 for determining the image component type selected by the user, and a program determining unit 12 for determining whether an active program displayed on the CRT 2 has been switched by the user.

The control unit 1 further includes a layout processing unit 14 for executing the layout program and a line work processing unit 15 for executing the line work program. The layout and line work programs are stored in the hard disk 5.

Other control units 16, a display control unit 17, and a work memory 18 are included in the control unit 1. The display control unit 17 executes various display control operations so that a window is displayed on the CRT 2 when the layout and/or line work programs are executed, and also magnifies the selected images when they are displayed on the CRT 2. The work memory 18 temporarily stores layout information created during the layout process and corrected line work created during the line work editing process. The work memory 18 stores this information until it is updated by the user.

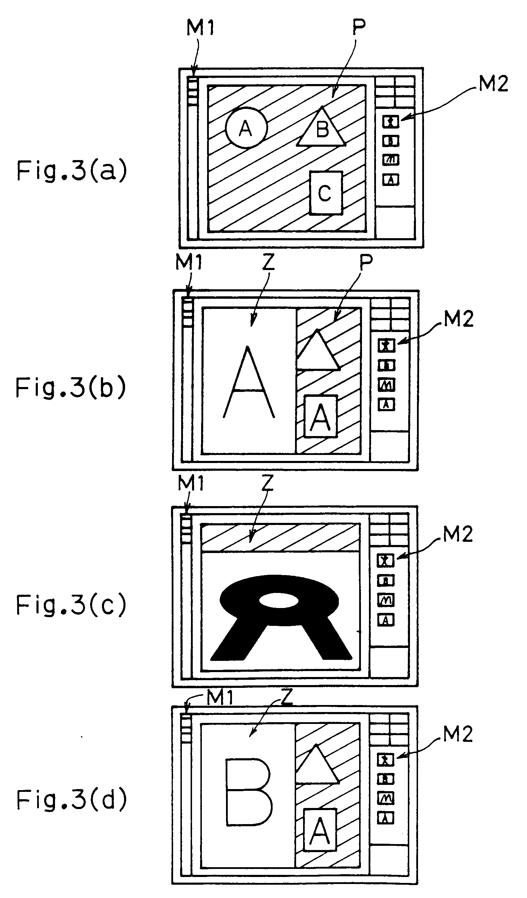

Fig. 3a shows the display window created when the layout processing program is opened. A menu M1 is displayed on the upper left portion of the screen, and allows the user to switch between various programs. An icon list M2 is displayed on right side of the display screen, each icon representing a different image component. This arrangement allows the user to select an image component to be included on a page window P by "dragging and dropping" the icon representing that image component onto the page window P. The image components included on page window P in Fig. 3 are shown as symbols ○, △ and □.

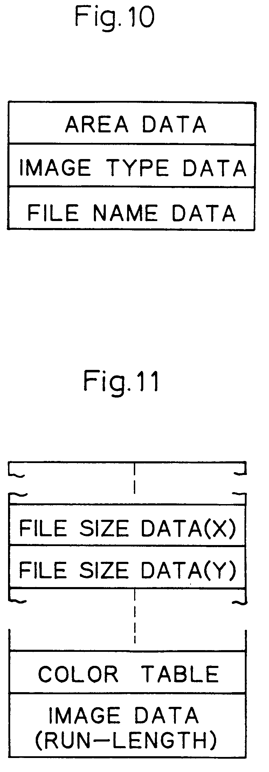

Each image component on the page window P has a data file structure as shown in Fig. 10. This data structure includes area data that indicates the position of the image component on the page window P, image type data that represents the type of image component, and file name data. Another data file for storing line work data has a structure as shown in Fig. 11. The size of each file along the X and Y coordinates (corresponding to the transverse and longitudinal directions, respectively) are stored in a header position. A color table and run-length image data are also stored therein.

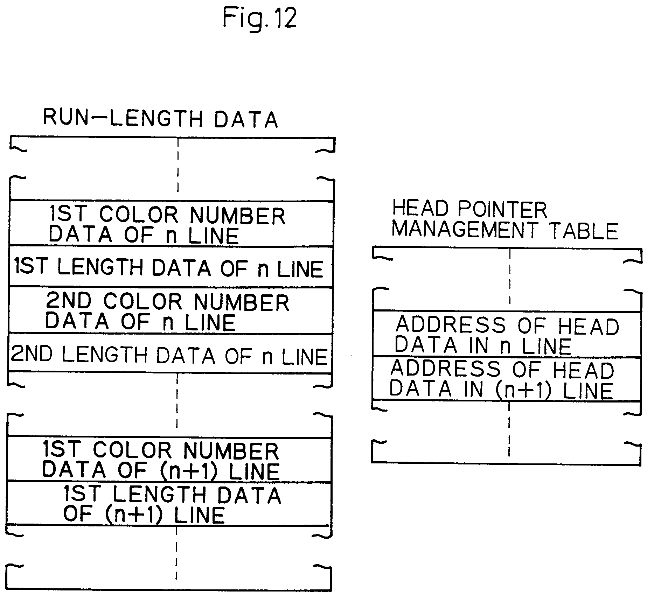

Fig. 12 shows the data structure of the line work data when stored in the work memory 18. This corresponds to the image data shown in Fig. 11. As can be seen in Fig. 12, the respective image data are stored in the work memory 18 as the color number and length format of each line thereof. A head pointer management table is independently contained in this work memory 18. This head pointer management table indicates the head data address of each line (in the X direction) in the work memory 18.

### FEATURES OF THE CONTROL PROCESS

The control process of the image processing apparatus includes the following features.

First, when line work in the page window W is selected by the user during the layout process, the active program displayed on the display unit is automatically switched from the layout program to the line work process program, and the selected line work is automatically enlarged and displayed in a special window Z. As shown in Fig. 3(b), line work in this special window Z overlaps with the page window P and the line work is displayed in an enlarged view.

Second, when the active program is switched from the layout program to the line work process program, any line work data which had been previously edited is read out from the work memory 18, and is then, as shown in Fig. 3(c), automatically displayed in special window Z.

Third, when line work is dragged from the icon list M2 and dropped into the page window P, as shown in Fig. 3(d), this dragged line work is automatically enlarged and displayed in special window Z.

Fourth, when line work is displayed in special window Z, other images are temporarily deleted and thus only the line work is displayed.

### CONTROL PROCESS OPERATIONS

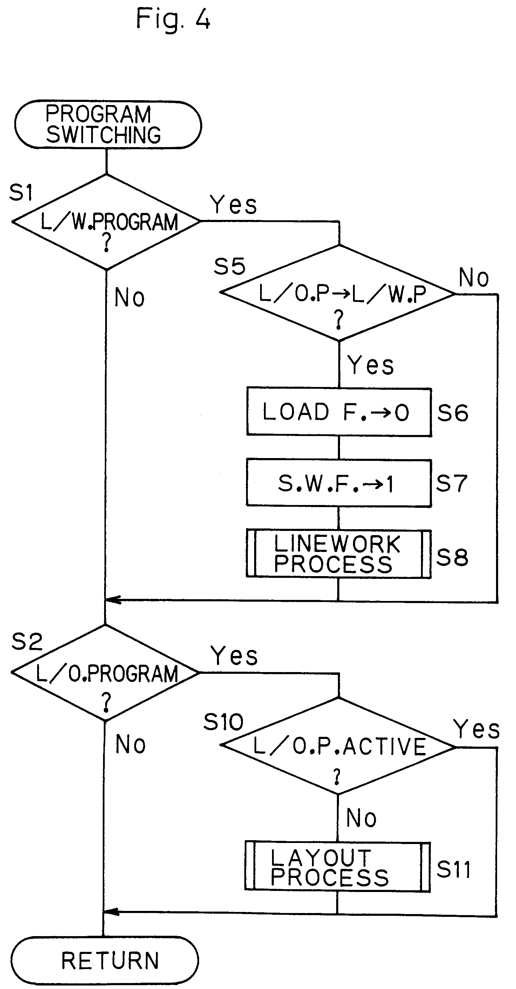

The computer implementation of these control processes will now be described in detail, with reference to the flow charts shown in Figs. 4 to 9.

### A. PROGRAM SWITCHING PROCESS

Fig. 4 is a flow chart showing program switching process. First, a determination is made at step S1 as to whether or not the line work process program is selected. At step S2, another determination is made as to whether or not the layout program is selected. If the line work process program is selected from the menu M1 displayed on the CRT 2, the control process is advanced from step S1 to step S5. At step S5, it is determined whether or not the active program has been switched from the layout program to the line work process program. If NO, then the control process is advanced from step S5 to step S2. If YES, the control process is advanced from step S5 to step S6. At step S6, a load flag is set to "0". Here, a "load flag" is a flag used to determine whether or not other data stored in the hard disk unit 5 is different from that stored in the work memory 18. At step S7, a special window flag is set to "1". This special window flag is a flag used to determine whether or not the special window is displayed. At step S8, a line work process (discussed below) is executed.

On the other hand, if the layout program is selected, the control process is advanced from step S2 to step S10. At step S10, it is determined whether or not the layout program is active. If the layout program is inactive, the control process is advanced to step S11 and the layout process (described below) is performed. Conversely, if the layout program is already active, the program switching routine ends without executing other process operations.

### B. LAYOUT PROCESS

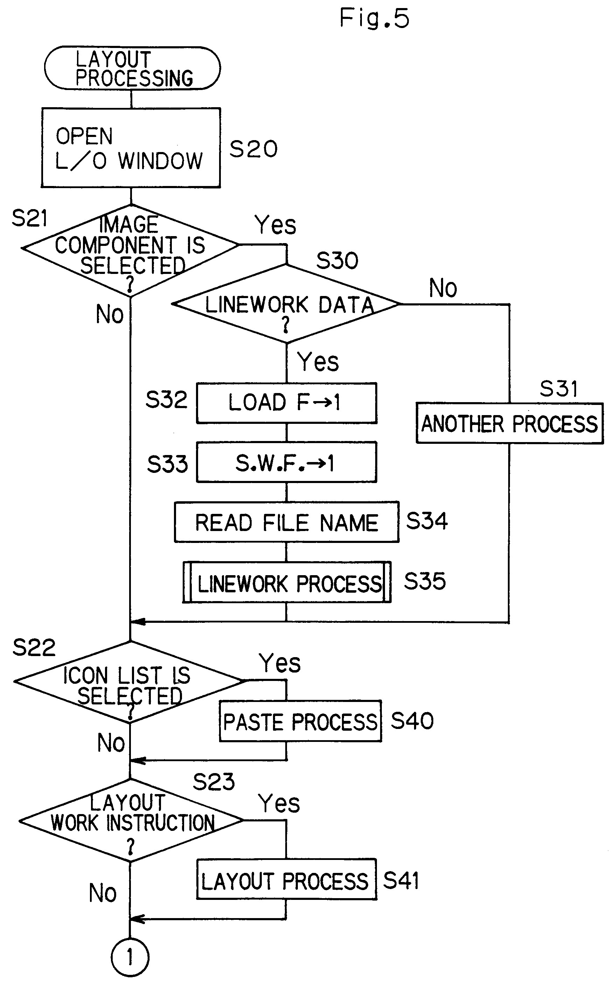

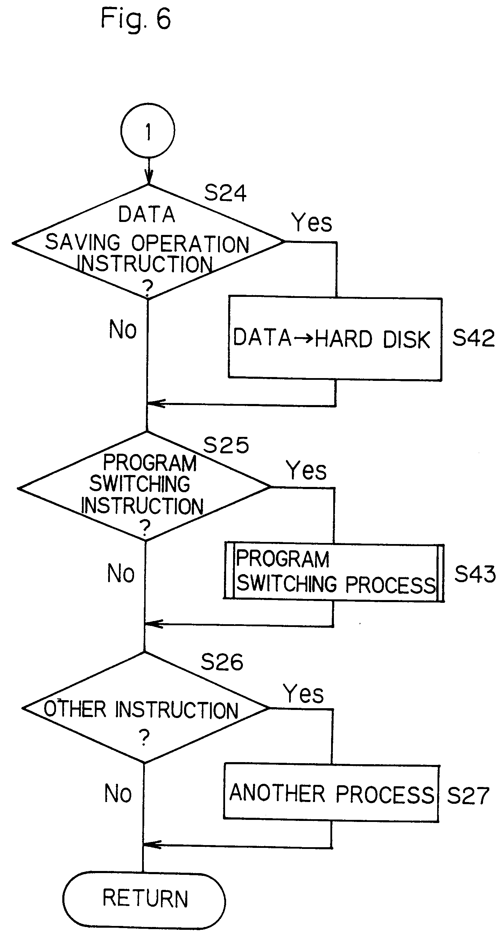

Referring now to Figs. 5 and 6, the layout process will be explained.

In the layout process, a window is first opened on the display screen at step S20. At step S21, a determination is made as to whether or not an image component in the window has been selected. At step S22, another determination is made as to whether or not any image component icons displayed on the icon list M2 have been selected. The selection of the image components and the icons are performed by placing the cursor controlled by the mouse 4 over the image component or the icon and "double-clicking" twice thereon. At step S23, it is determined whether or not a layout instruction has been issued. At step S24, it is determined whether or not a data saving instruction has been issued. At step S25, it is determined whether or not a program switching instruction has been issued. Then, at step S26 it is determined whether or not other instructions have been issued. When other instructions have been issued, the process operation is advanced from step S26 to step S27 and the process operations are executed in accordance with the instructions.

When an image component on the page window P is selected, the layout process is advanced from step S21 to S30. At step S30, a determination is made as to whether or not the selected image component is line work. This determination is made based upon the image type data stored in the data file shown in Fig. 10. When it is determined that the selected image component is not line work, the process operation is advanced to step S31, at which time the relevant process operation is performed. When it is determined that the selected image component is line work, the layout process is advanced to step S32, and the load flag is set to "1" and the special window flag is set to "1" at step S33. At step S34, the name of the file is read, and then the layout process is advanced to step S35. At step S35, the line work process (described below) is carried out.

When an icon on the icon list M2 is selected, the layout process is advanced from step S22 to step S40. At step S40, a paste process is executed in which the most current version of the file selected from the icon list is displayed in the page window P.

On the other hand, when another layout process is selected, the layout process is advanced from step S23 to step S41, at which time the layout process corresponding to the selected instruction is executed.

When an instruction is issued to save the data, the layout process is advanced from step S24 to step S42 and the data stored in the work memory 18 is saved to the hard disk 5. When another instruction is issued to switch the program, the layout process is advanced from step S25 to step S43. At step S43, the program switching process indicated in Fig. 4 is executed.

### C. LINE WORK PROCESS

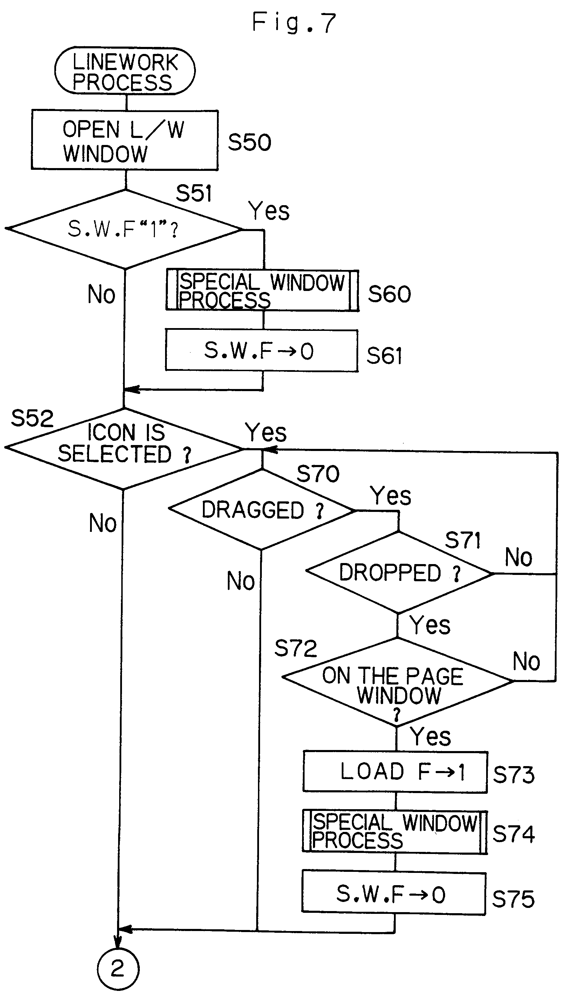

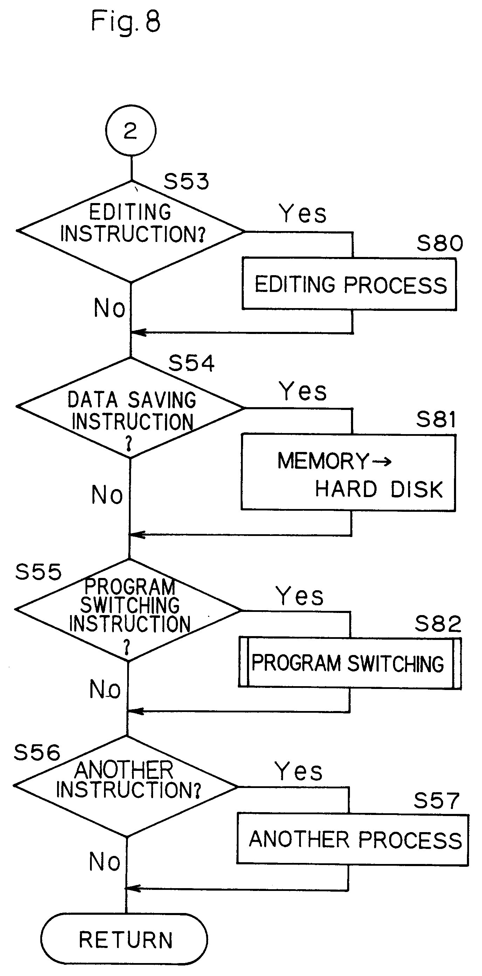

Referring now to Figs. 7 and 8, the line work process will be described.

At step S50 of the line work process operation, a window for the line work process is opened. At step S51, it is decided whether or not the special window flag is "1", and at step S52 it is decided whether or not an icon at M2 has been selected. At step S53, it is determined whether or not an editing instruction has been issued. At step S54, it is determined whether or not an instruction to save the data has been issued, and at step S55 it is determined whether or not an instruction to switch programs has been issued. Then, at step S56, it is determined whether or not other instructions have been issued. When other instructions have been issued, the line work process is advanced from step S56 to step S57 and the process operation is carried out in accordance with these instructions.

If the special window flag is set to "1", after the window for the line work process has been opened, the line work process is advanced from step S51 to step S60. At step S60, the special window process operation is carried out. After the special window process operation is performed, the line work process is advanced to step S61 and the special window flag is set to "0".

If an icon on the icon list M2 is selected during the line work process, the line work process is advanced from step S52 to step S70. At step S70, a determination is made as to whether or not the icon is being dragged. If the icon is not being dragged, then no further processing is carried out and the line work process is moved to step S53. If the icon is being dragged, the line work process is advanced from step S70 to step S71. At this step S71, it is determined whether or not the icon has been dropped. If the icon has been dropped, then the line work process is advanced to step S72, where it is determined whether or not the icon has been dropped on the page window P. If the icon has been dropped on the page window P, the line work process is advanced to step S73 and the load flag is set to "1". Thereafter, the line work process is advanced to step S74 and the selected line work is displayed on the special window Z. After the special window process is carried out, the special window flag is set to "0" at step S75.

If there editing instructions have been issued, the line work process is advanced from step S53 to step S80 and the editing instructions are executed. If an instruction to save the data has been issued, the line work process is advanced from step S54 to step S81 and the image data in the work memory 18 is updated and saved as a database on the hard disk unit 5. If an instruction to switch programs is issued, the line work process is advanced from step S55 to step S82 and the program switching process shown in Fig. 4 is executed.

### D. SPECIAL WINDOW PROCESS

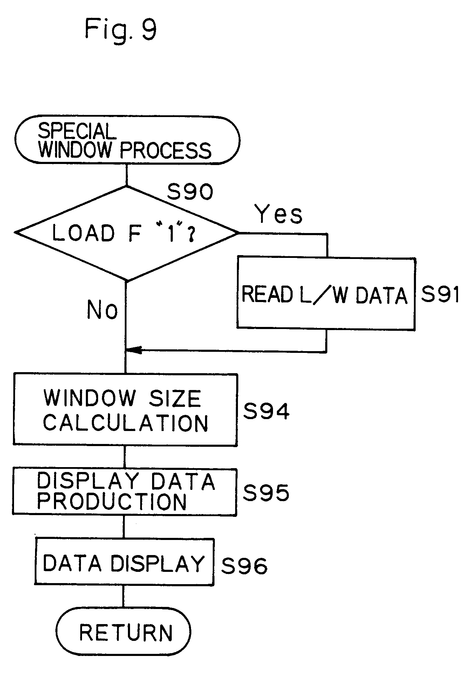

Next, the special window process operation will be explained with reference to Fig. 9.

At step S90, it is determined whether or not the load flag is equal to "1". If the load flag is "1", the special window process is advanced to step S91. At step S91, the image data in the relevant line work file is read out from the hard disk unit 5, and this data is stored in the work memory 18. At step S94, the size of the special window is calculated. The size of the special window is based on the relationship between the transverse and longitudinal sizes of the line work to be displayed within the special window and the total size of the display.

It should also be noted that special window is anchored to the lower left corner of the display screen. Thus when the special window is displayed overlapping the page window P, the special window Z will always be anchored to the left side of the display and page window W will not be split.

At step S95, display data is produced with reference to the size of the special window and the size of the line work. In this case, thickening/thinning operations on the run length image data of the line work stored in the work memory 18 are carried out. Then, at step S96, the line work selected, based on the data formed at step S95, is displayed on the special window Z.

In this process operation, when the program is switched from the layout program to the line work program and then the process operation defined at step S5 and step S6 of Fig. 4 is performed (i.e., when the load flag is "0"), the image data stored in the work memory 18 is displayed on the special window Z. Therefore, when the previously processed image is displayed again, it is not necessary to read the data from the hard disk unit 5. This reduces the time required for editing. In addition, because other types of image components are automatically deleted from the special window when they overlap with the line work, the time required to carry out editing can be further reduced.

In the above-described embodiment, line work in the run length format is employed as the image component. Alternatively, the present invention may be similarly applied to a picture in the bitmap format, a figure expressed in the vector format, and characters in the code format.

### SECOND EMBODIMENT

In the above-mentioned first embodiment of the image processing apparatus, only one image processing program was included therein. In an image processing apparatus according to a second embodiment of the present invention, a number of programs can be included, such as a layout program, a line work process program, a picture process program, a character process program, and a graphics process program.

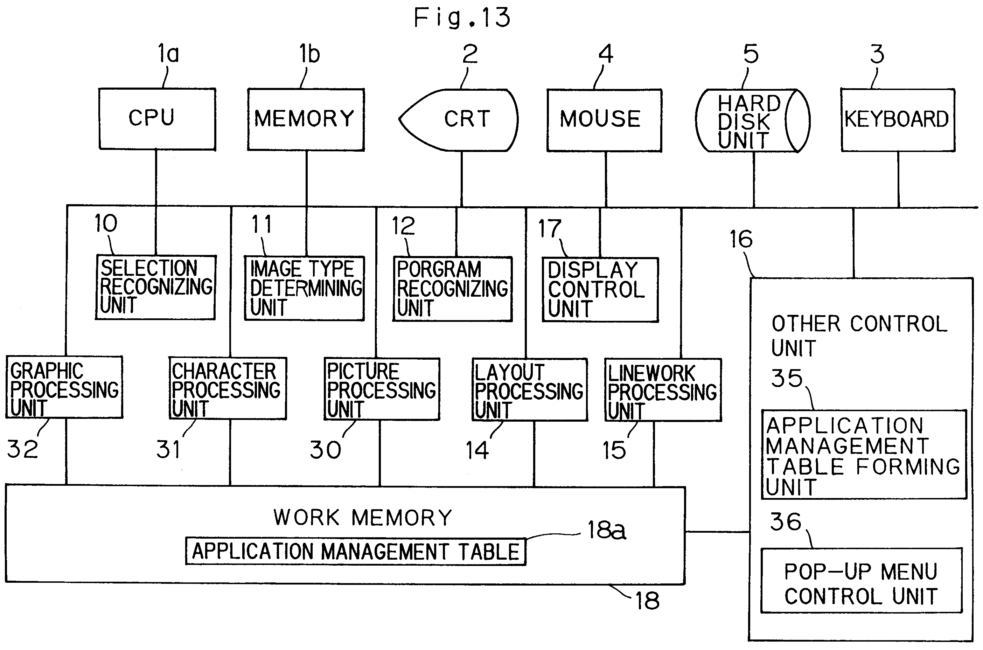

Fig. 13 is a schematic block diagram showing the overall arrangement of an image processing apparatus according to a second embodiment of the present invention. It should be noted in Fig. 13 that the same reference numerals shown in Fig. 2 are employed to indicate portions having the same functions in the first embodiment. The image processing apparatus according to the second embodiment includes, in addition to the functions of the first embodiment, a picture processing unit 30 for processing pictures expressed in the bitmap format, a character processing unit 31 for process characters represented by the code format, and a graphic processing unit 32 for process graphics expressed in the vector format. These processing units 30 to 32 correspond to portions for executing programs used to process the relevant data types. More specifically, each of these processing units 30 to 32 are units into which the relevant processing program are read into from the hard disk unit 5 after being selected by the user.

In this second embodiment, the work memory 18 contains an application management table 18a. This application management table 18a is a table in which all of the image processing programs in the second image processing apparatus are classified based upon the types of programs to be managed. This application management table 18a is formed by an application management table forming unit 35, and is displayed by a pop-up menu control unit 36. The application management table forming unit 35 and the pop-up menu control unit 36 are located in another control unit 16, which executes a system control program and the like.

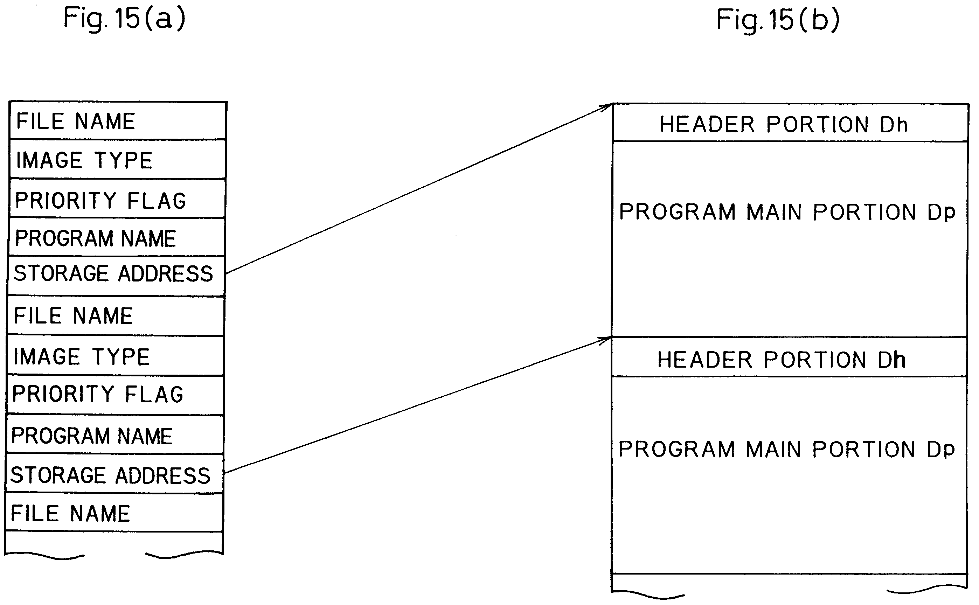

As shown in Fig. 15a, the application management table 18a contains information on each image process program, including the image type for which it is intended, the file name of the program, and a priority flag. The priority flag is used to identify which image process program will be given priority. This application management table 18a further contains a program name and a memory storage address. The image process programs are stored in the hard disk unit 5. As shown in Fig. 15b, each image process program contains a program header portion Dh and a program main portion Dp, which includes the file name, the image type, and the file size.

### CONTROL PROCESS OPERATIONS

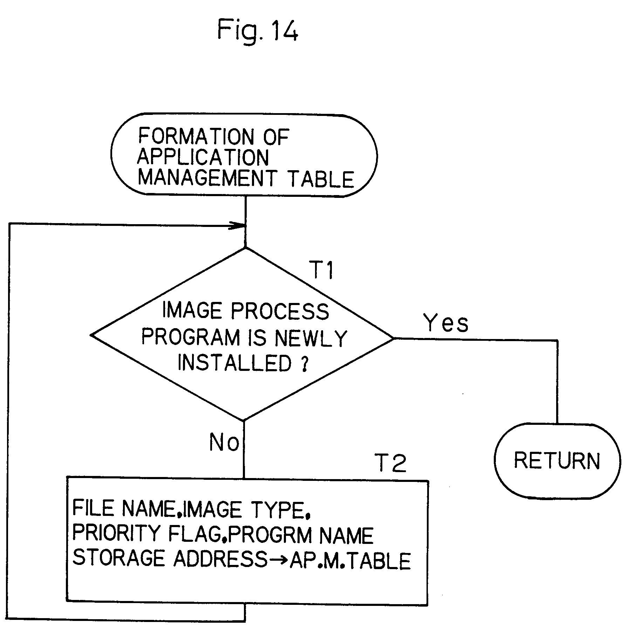

The computer implementation of the control processes used in the second embodiment of the image processing apparatus will now be described in detail, with reference to the flow charts shown in Figs. 14 to 20.

### FORMATION OF APPLICATION MANAGEMENT TABLE

Fig. 14 shows a flow chart for forming the application management table 18a.

At step T1, a determination is made as to whether or not an image process program has been newly installed in the hard disk unit 5. If YES, then the file name, image type, priority flag, program name, and storage address are added to the application management table 18a at step T2. It should be noted that the file name, priority flag, and storage address are transferred from the contents of the header portion Dh of the image process program, the program name is entered by the operator via the keyboard 3, and the priority flag is set to "0". This operation is performed for all newly added image process programs located on the hard disk 5.

In an application management table 18a formed in the above-described manner, the file names of the respective programs, the storage addresses on the hard disk unit 5, and the priority flag data are all used to manage the plurality of process programs stored in the second image processing apparatus.

### IMAGE PROCESSING CONTROL

The control flow executed when an image component arranged on a page window is selected for processing during the layout process will now be explained. This control process corresponds to the process described in step S1 and steps S30 to S35 in Fig. 5 of the above-described first embodiment.

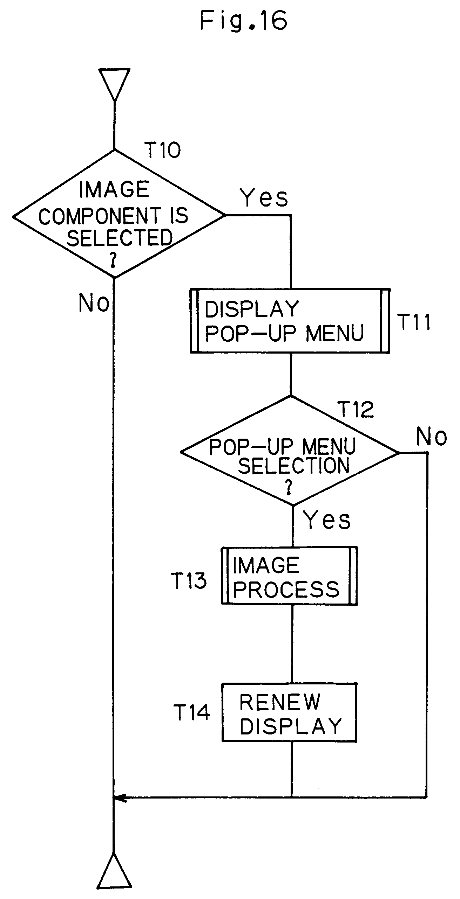

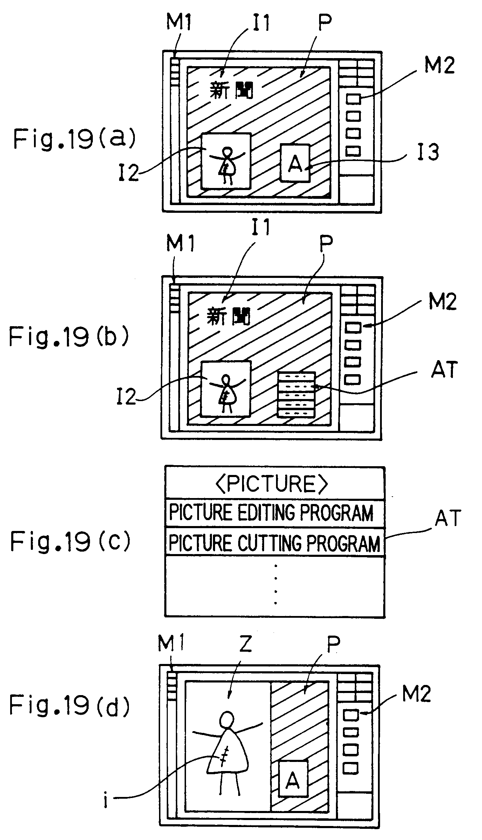

As shown in Fig. 16, at step T10 it is determined whether or not the image component arranged on the page window W has been selected. As shown in Fig. 19a, characters I1, a picture I2, and a line work I3 are present on the page window P for layout purposes. When an image component is selected, the control process is advanced from step T10 to step T11.

At step T11, a pop-up menu display process is executed. As shown in Fig. 19b, the pop-up menu display process produces a menu AT for an image process program, according to the type of image component selected (to be described in greater detail below). The pop-up menu AT is displayed in a portion of the page window P. Then, at step T12, a determination is made as to whether or not the image process program has been selected from the displayed pop-up menu. After the image process program has been selected by the user, the control process is advanced to step T13. At step T13, an image process is executed for the selected image in accordance with the selected image process program. If this image process is completed, then the control process is advanced to step T14. At step T14, the present program is switched to the original program, and the processed image is displayed on the page window P.

### DISPLAY PROCESS OF POP-UP MENU

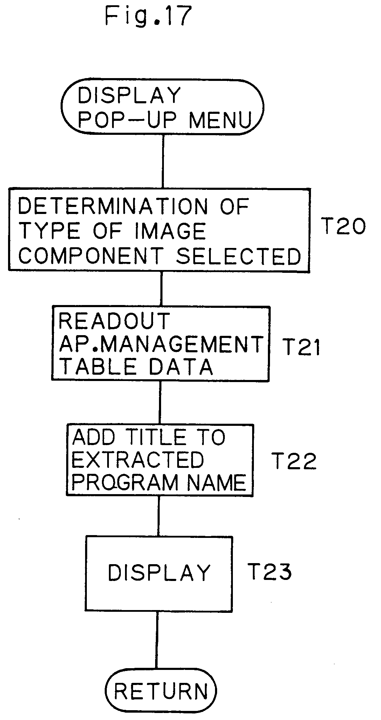

The process to display the pop-up menu is shown in Fig. 17.

In step T20, the type of image component selected is determined. This determination is carried out in a manner similar to the above-described first embodiment. That is, as indicated in Fig. 10, since the image component on the page window P contains area data, image type data, and file name data, it can be determined whether the selected image component is a line work, a picture, or a character. Since the picture I2 is selected in the example of Fig. 19, the image type is recognized as a "picture". Next, at step T21, the names of the image process programs capable of handling this data are read from the application management table in the work memory 18. At step T22, the name of the selected image is added to the extracted program names. Then, at step T23, these data are displayed on the page window P as shown in Fig. 19c. It should be understood that the process program having a priority flag set to "1" is displayed at the uppermost position of the pop-up menu.

### IMAGE PROCESS CONTROL

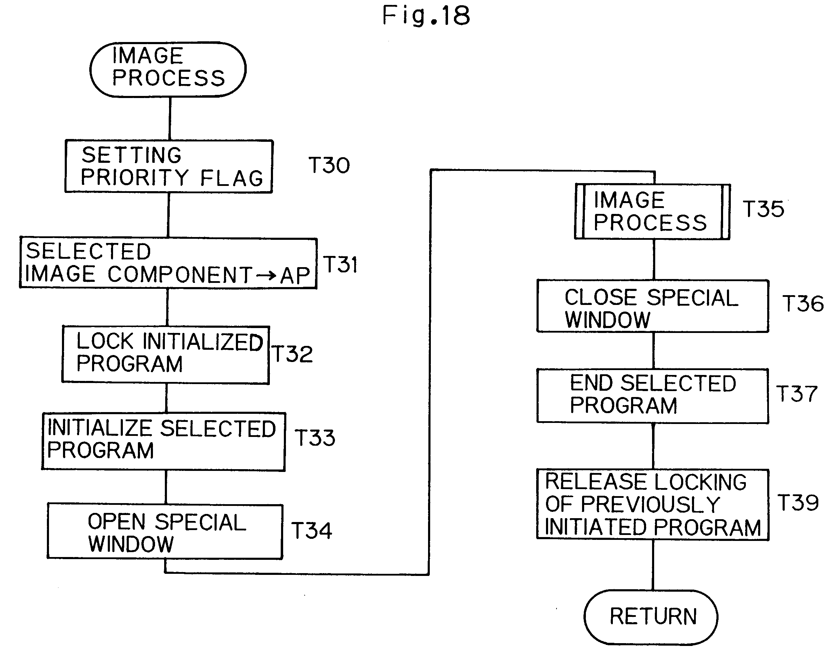

Fig. 18 shows the image process flow for the selected image process program.

At step T30, the priority flag for the image process program selected from the pop-up menu (will be referred to as "selected program" hereinafter) is set to "1", and the priority flag for an image process program of the same type is set to "0". Next, at step T31, the information about the selected image component is transferred to the selected program (AP). Specifically, as shown in Fig. 19, when an image component in the page window P is selected, image data for this selected image component is read from the work memory 18 into the selected program. When the image component is not present on the page window P, but rather is selected from the icon list M2, the file name data of this image component is transferred to the selected program. When the selected program is executed, the image data of the relevant image component is read out from the hard disk unit 5 based on this file name data, and this image data is loaded into the work memory 18.

At step T32, the active program (here, the layout program) is locked. In other words, the subsequent operation of this layout program is stopped. At step T33, the selected program is initialized and then the special window process is executed at step T34. This special window process is similar to that of the first embodiment. At step T35, the image component is enlarged and displayed on the special window Z. In the example shown in Fig. 19d, the picture I2 is displayed with an enlarged size on the special window Z. If a portion of picture I2 is to be edited (e.g., the portion "i"), this can be better facilitated because the picture has been enlarged.

When this image process has been completed, the special window Z is closed at step T36. Then, the selected program is ended at step T37 and, at step T39, the layout program is released.

In a normal image processing operation, there will be many instances when the same image process program is to be used successively. When this occurs, the proper image process program can be easily made because the previously selected image process program will displayed at the uppermost position in the menu AT.

In this second embodiment, since all of the image process programs capable of processing the selected image component are displayed in the menu mode in accordance with the type of the selected image component, the desired image process program can be easily selected.

This embodiment of the image processing apparatus can be modified in the following ways.

First, as described above, the image process programs capable of processing the selected image component are displayed on the pop-up menu. After the program selection has been made by the user, the selected program is initialized. Alternatively, the image process program whose priority flag is equal to "1" may be automatically initialized.

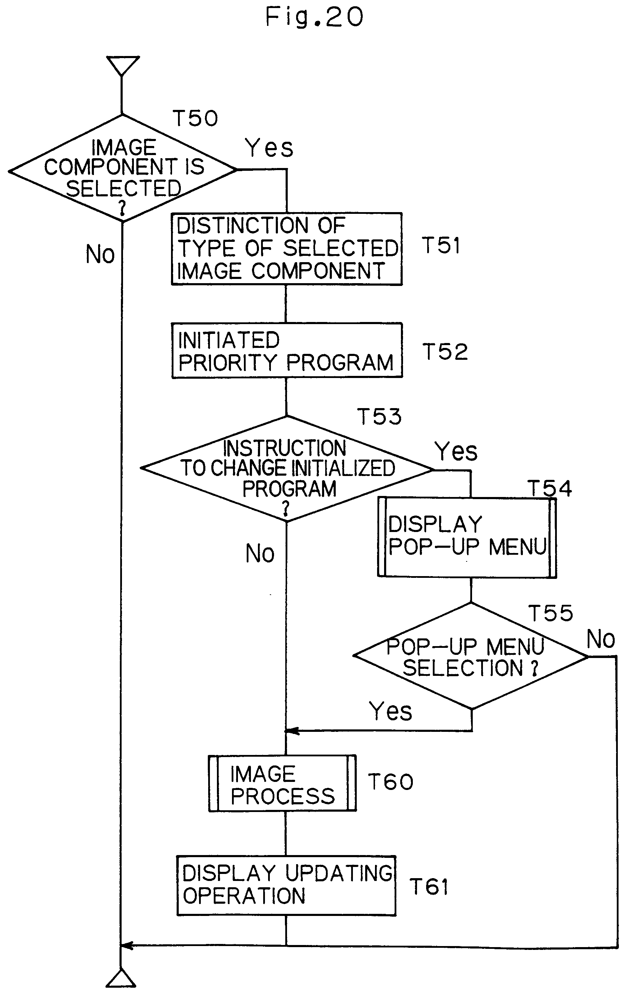

A control flow for this alternative is shown in Fig. 20. In Fig. 20, it is determined whether or not an image component is selected at step T50. If an image component is selected, the control process is advanced to step T51. At step T51, the type of the selected image component is determined. At step T52, an image process program that has a priority flag equal to "1" is read out from the hard disk unit 5. This information is stored in the application management table 18a. Then, this image process program is initialized. At step T53, the user is queried as to whether or not the automatically initiated image process program is to be used. If it is not to be used, and an instruction to change this initiated program to another program is issued, the control process is advanced from step T53 to step T54. At step T54, the pop-up menu is displayed. At step T55, a menu selection is input by the user. These process operations are similar to those defined at steps T11 and T12 in the above-described example.

When the automatically selected program is used, the control process is advanced from step T53 to step T60. At step T60, the image process is executed in accordance with this program. At step T61, a display updating operation is performed. These process operations are similar to those of the steps T13 and T14 of the above-described example.

In this example, since the previously selected image process program is automatically initiated, similar process operations can successively repeated with ease.

In the above example, the priority flag is set to the previously used image process program, so that this image process program is displayed with a top priority, or is automatically initiated. However, in another modification to the second embodiment of the image processing apparatus, the priority flag can be set for the most frequently used image process program.

In the previous example, the image process program stored in the hard disk unit 5 is searched automatically in order to form the application management table. However, in another modification to the second embodiment of the image processing apparatus, data for the application management table may be entered manually by the user.

In the above example, the image process programs capable of processing the selected image component is displayed on the pop-up menu. However, in another modification to the second embodiment of the image processing apparatus, when only one image process program is capable of processing the selected image component, this single image process program may be automatically initiated in a manner similar to the first embodiment.

Various details of the invention may be changed without departing from its spirit nor its scope. Furthermore, the foregoing description of the embodiments according to the present invention is provided for the purpose of illustration only, and not for the purpose of limiting the invention as defined by the appended claims and their equivalents.

## Claims

1. An image processing apparatus having at least one image processing program for processing image components having one data type, a layout program for arranging image components having various data types, and said image processing program and said layout program are switchably operable, said image processing apparatus comprising:
a display means for displaying said image components arranged by said layout program at a first magnification;
a selection determining means for determining whether one of said image components displayed on said display means has been selected by a user;
an initializing means for initializing an cage processing program capable of processing an image component selected by a user; and
a display control means for displaying said selected image component on said display means at a second magnification greater than said first magnification.

2. An image processing apparatus as in claim 1, further comprising:
an image type determining means for determining a data type of said selected image component; and
a menu display means for displaying a menu listing of image processing programs capable of processing said selected image component having a data type determined by said image type determining means;
wherein said initializing means initializes an image processing program selected by said user from said image processing programs displayed in said menu.

3. An image processing apparatus as in claim 2, wherein:
said menu display means displays a previously initialized image processing program at a top of said menu listing.

4. An image processing apparatus as in claim 1, wherein:
said initializing means automatically initializes said image processing program after said image component has been selected where said image processing program is capable of processing said selected image component.

5. An image processing apparatus as in claim 1, wherein:
said initializing means automatically initializes a previously initialized image processing program capable of processing said selected image component if a plurality of image processing programs capable of processing said selected image component are present.

6. An image processing apparatus as in claim 1 wherein:
said display control means displays only said selected image component at said second magnification ignoring image components not selected.

7. An image processing apparatus as in claim 1 wherein:
said image component is displayed on said display means as an icon in an icon list; and
said selection determining means determines that one of said image components has been selected.by said user when said icon has been dragged and dropped by said user onto a layout display area.

8. An image processing apparatus having an image processing program for processing image components, a layout program for arranging a plurality of image components, and said image processing program and said layout program are switchably operable, said image processing apparatus comprising:
a display means for displaying said image components arranged by said layout program;
a program recognizing means which recognizes which of said image processing program or said layout program has been initialized;
a selection recognizing means which recognizes that an image component displayed on said display means has been selected;
an image process determining means which determines whether or not said selected image component can be processed by said image process program; and
a display control means which displays said selected image with a magnified size when said image process program is initialized and said image process program is capable of processing said selected image, and displays said selected image on said display means in a predetermined position when said layout program is initialized.

9. An image processing apparatus having an image processing program for processing image components, a layout program for arranging a plurality of image components, and said image processing program and said layout program are switchably operable, said image processing apparatus comprising:
a display means for displaying said image components arranged by said layout program at a first magnification;
an image data storing means for storing an image processed by said image processing program;
a program switching recognizing means for recognizing that an initialized program has been switched from said layout program to said image processing program; and
a display control means for displaying the image data stored in said image storing means on said display means at a second magnification greater than said first magnification in response to said initialized program being switched from said layout program to said image processing program.

10. An image processing apparatus as in claim 9, wherein:
said display control means displays said magnified image component to be aligned along one edge of said display means and overlapping other image components displayed in said layout program.

11. An image processing apparatus as in claim 9, wherein:
said display control means enlarges said selected image to a maximum allowable magnification in accordance with a display area of said display means and a shape of said selected image component, and displays said magnified image on said display area.

12. An image processing apparatus as in claim 9, wherein:
said image component is line work expressed in a run length format, and said image processing program is a line work processing program.

13. An image processing apparatus as in claim 8, wherein:
said image component is at least one selected from the group consisting of line work expressed in a run length format, a picture in a bitmap format, a graphic form in a vector format, or a character in a code format.

14. An image processing apparatus comprising:
a microprocessor configured to operate in a processing mode and a layout mode, and to display images on a display connected to said microprocessor, the images being of various data types, said microprocessor further configured to switch between said processing mode and said layout mode, and the images are displayed on said display at a first magnification;
wherein a selection determining means operably associated with said microprocessor determines whether one of said images displayed on said display means has been selected by a user and in response to the selection of said one of said images, said one of said images is displayed on said display at a second magnification greater than said first magnification.

15. An image processing apparatus as in claim 14, further comprising:
an image type determining means for determining a data type of said one of said images; and
a menu display means for displaying a menu listing of image processing programs capable of processing said selected image component having a data type determined by said image type determining means.

16. An image processing apparatus as in claim 15, wherein said menu display means displays a previously initialized image processing program at a top of said menu listing.

17. An image processing apparatus as in claim 14, a means for initializing an image processing program for editing said one of said images.

18. A method for processing images with an image processing apparatus, the method comprising;
providing an image processing apparatus with a plurality of image processing programs, each image processing program configured for processing image components, each image processing program configured to process one type of image component;
providing an image processing apparatus with a layout program for arranging image components having various data types;
switching between operations of the image processing programs and the layout program;
displaying the image components arranged by the layout program at a first magnification;
determining selection of one of the image component displayed on said display in response to selection of the one image component by a user;
determining which type of image component has been selected;
initializing one of the image processing programs in response to determination of which type of image component has been selected; and
displaying the selected image component at a second magnification greater than said first magnification.

19. The method as in claim 18, further comprising:
displaying a menu listing of image processing programs capable of processing the selected image component in response to determination of the data type of the selected image component;
initializing one of the image processing programs displayed in the menu in response to selection by the user.

20. The method as in claim 19, further comprising
initializing a previously initialized image processing program capable of processing the selected image component where a plurality of image processing programs capable of processing the selected image component are present.

21. The method as in claim 18, further comprising:
displaying only the selected image component at the second magnification.

22. The method as in claim 18, further comprising:
displaying the selected image component as an icon in an icon list; and
determining one of said image components has been selected in response to the user dragging and dropping the icon onto a displayed layout display area.
